# FASCICULE DE BREVET EUROPEEN

(11) **EP 1 490 444 B1**
(45) Date de publication et mention de la délivrance du brevet: **05.05.2010**
(21) Numéro de dépôt: 03738176.1
(22) Date de dépôt: 19.03.2003
(51) Int. Cl.: C09D 5/44, C25D 13/04

(54) **PROCEDE DE FIXATION DE MACRO-OBJETS SUR UNE SURFACE CONDUCTRICE OU SEMI-CONDUCTRICE DE L ELECTRICITE PAR ELECTRO-GREFFAGE, SURFACES OBTENUES ET APPLICATIONS**
VERFAHREN ZUR FIXIERUNG VON MAKROOBJEKTEN AUF EINER ELEKTRISCHLEITENDEN ODER HALBLEITENDEN FLÄCHE DURCH ELEKTROPFROPFEN, SO ERHALTENE FLÄCHEN UND DEREN VERWENDUNG
METHOD OF FIXING MACRO-OBJECTS TO AN ELECTRICITY CONDUCTING- OR SEMI-CONDUCTING-SURFACE BY MEANS OF ELECTROGRAFTING, SURFACES THUS OBTAINED AND APPLICATIONS THEREOF

(30) Priorité: 26.03.2002 FR 0203796
(43) Date de publication de la demande: 29.12.2004
(73) Titulaire: Commissariat à l'énergie atomique et aux énergies alternatives, 75015 Paris (FR)
(72) Inventeur: BUREAU, Christophe, F-92150 Suresnes (FR); DENIAU, Guy, F-78610 Auffargis (FR); GONZALEZ, José, F-77820 Le Chatelet en Brie (FR); PALACIN, Serge, F-78180 Montigny le Bretonneux (FR)
(74) Mandataire: Goulard, Sophie
(86) Numéro de dépôt international: PCT/FR2003/000877
(87) Numéro de publication internationale: WO 2003/080748

(56) Documents cités:
- EP-A- 0 169 804
- FR-A- 2 745 303
- XUDONG LOU: "Electrografting of Preformed Aliphatic Polyesters onto Metallic Surfaces" AMERICAN CHEMICAL SOCIETY, [en ligne] vol. 18, - 3 janvier 2002 (2002-01-03) pages 2785-2788, XP002223305 Extrait de l'Internet: <URL:http://pubs.acs.org/isubscribe/journa ls/langd5/asap/pdf/la011289g.pdf> [extrait le 2002-12-02] cité dans la demande

## Description

La présente Invention est relative à un procédé de fixation de macro-objets sur une surface conductrice ou semi-conductrice de l'électricité, par électro-greffage, ainsi qu'aux surfaces conductrices ou semi-conductrices de l'électricité obtenues en mettant en oeuvre ce procédé et à leurs applications.

La réalisation de surfaces conductrices ou semi-conductrices de l'électricité recouvertes de macro-objets et notamment de films polymères présente un grand intérêt dans de nombreux domaines, en particulier pour la fabrication de composants électroniques ou de dispositifs optiques intégrés, pour la réalisation de dispositifs utilisables dans le domaine biomédical ou dans les biotechnologies (puces à ADN, puces à protéines, etc...), pour la protection anticorrosion, ainsi que pour toutes les modifications des propriétés superficielles des métaux ou des semi-conducteurs.

Il semble aujourd'hui admis que l'obtention de films polymères greffés par électro-greffage de monomères vinyliques activés sur des surfaces conductrices procède grâce à une électro-initiation de la réaction de polymérisation à partir de la surface, suivie d'une croissance des chaînes, monomère par monomère. Le mécanisme réactionnel de l'électro-greffage a notamment été décrit dans les articles de C. Bureau et al., Macromolécules, 1997, 30, 333 ; C. Bureau et J. Delhalle, Journal of Surface Analysis, 1999, 6(2), 159 et C. Bureau et al., Journal of Adhésion, 1996, 58, 101.

A titre d'exemple, le mécanisme réactionnel de l'électro-greffage de l'acrylonitrile par polarisation cathodique peut être représenté selon le SCHÉMA 1 ci-dessous, dans lequel la réaction de greffage correspond à l'étape n°1, où la croissance a lieu à partir de la surface ; l'étape n°2 étant la réaction parasite principale qui conduit à l'obtention d'un polymère non greffé :

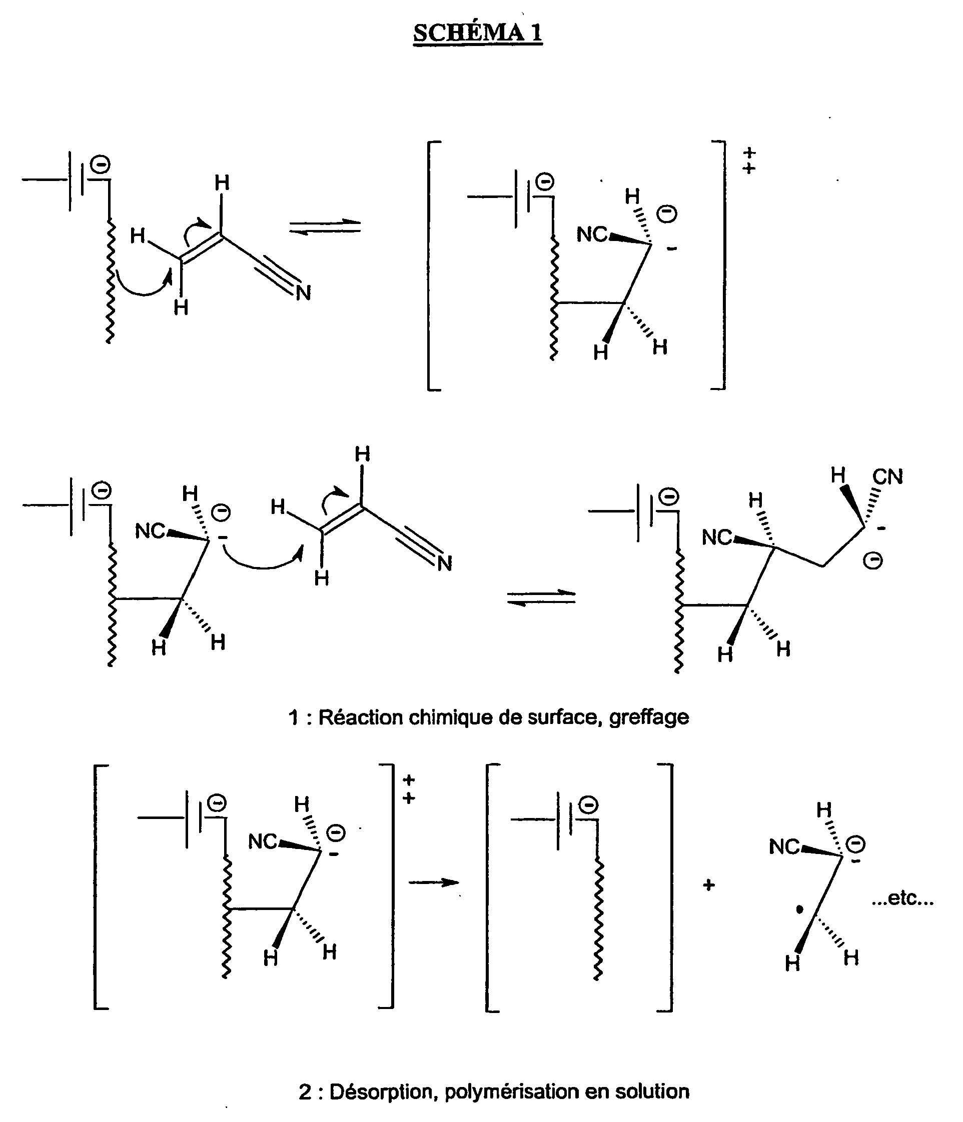

La croissance des chaînes greffées s'effectue donc par polymérisation purement chimique, c'est-à-dire indépendamment de la polarisation de la surface conductrice qui a donné lieu au greffage. Cette étape est donc sensible à (elle est en particulier interrompue par) la présence d'inhibiteurs chimiques de cette croissance, en particulier par les protons.

Dans le schéma 1 ci-dessus, où l'on a considéré l'électro-greffage de l'acrylonitrile sous polarisation cathodique, la croissance des chaînes greffées s'effectue par polymérisation anionique. Cette croissance est interrompue notamment par des protons, et il a été démontré que la teneur en protons constitue même le paramètre majeur qui pilote la formation de polymère en solution, ainsi que les informations récupérées en cours de synthèse, notamment l'allure des voltammogrammes qui accompagnent la synthèse (voir en particulier l'article de C. Bureau, Journal of Electroanalytical Chemistry, 1999, 479, 43).

Les traces d'eau, et plus généralement les protons labiles des solvants protiques, constituent des sources de protons préjudiciables à la croissance des chaînes greffées.

Avant même que les mécanismes réactionnels de l'électro-greffage de monomères vinyliques aient été compris, ce point technique bloquant avait été clairement identifié par l'Homme de l'Art, comme en témoignent les détails des différents procédés mis au point sur la base de ces composés :
- dans la demande de brevet FR-A-2 480 314, les auteurs mentionnent un procédé d'électro-greffage de monomères vinyliques consistant à préparer une solution ayant une teneur en eau au plus égale à 10⁻³ mol/l, et précisent même, dans un mode privilégié de réalisation que cette teneur en eau doit au plus être égale à 5.10⁻⁴ mol/l ;
- dans la demande de brevet EP-A-0 618 276, les auteurs mentionnent un procédé d'électro-greffage de monomères vinyliques mettant en oeuvre un solvant aprotique ;
- dans la demande de brevet EP-A-0 665 275, les auteurs mentionnent également un procédé d'électro-greffage de monomères vinyliques mettant en oeuvre des solvants organiques aprotiques. En outre, la partie descriptive de cette demande antérieure précise que la teneur en eau du bain d'électrolyse est de préférence inférieure à 10⁻³ M. Ainsi, et avant l'électrolyse, le bain d'électrolyse est dégazé par bullage avec un gaz inerte contenant au maximum 5 ppm d'eau et 10 ppm d'oxygène ;
- dans le brevet américain n°6,180,346, les auteurs utilisent un procédé d'électropolymérisation de molécules comportant des substituants vinyliques. A titre d'exemple, ils citent l'utilisation d'acétonitrile comme solvant et précisent que celui-ci doit être séché avant utilisation, ce qui - pour l'Homme de l'Art - traduit une teneur en eau résiduelle de l'ordre de quelques dizaines de ppm au plus.

Les teneurs en eau très faibles requises par l'électro-greffage de monomères vinyliques sont en général maintenues, selon l'enseignement des documents de l'art antérieur cité ci-dessus, pendant ou avant la synthèse, via différentes techniques de déshydratation telles que par exemple via un barbotage de gaz inerte (azote, argon, etc...) sec, dont la teneur en eau est de l'ordre de quelques ppm.

Pour des raisons analogues de maîtrise de la teneur en sources de protons dans le milieu réactionnel, seuls des solvants aprotiques, et des monomères qui sont eux-mêmes aprotiques - c'est-à-dire qui ne comportent pas de groupements fonctionnels ayant des fonctions acides (au sens de Brönsted) dans le solvant d'étude - ont été proposés pour l'obtention de films organiques électro-greffés.

Dans la pratique, le teneur en eau de ces solvants est abaissée au prix d'une préparation longue et fastidieuse, par exemple via un séjour sur des composés déshydratants comme le pentoxyde de phosphore (P₂O₅) ou sur des tamis moléculaires (par exemple de porosité 4 Angströms), via une distillation sous pression réduite de gaz rares inertes (azote, argon, etc...) ou via une combinaison de ces méthodes. On note ainsi :
- dans la demande de brevet FR-A-2 480 314, que les auteurs préconisent l'utilisation d'un solvant organique aprotique ne donnant pas de réaction parasite avec le monomère utilisé ;
- dans la demande de brevet EP-A-0 618 276, les auteurs préconisent également l'utilisation de solvants aprotiques ; et
- dans la demande de brevet EP-A-0 665 275, outre le fait de mentionner l'utilisation de solvants aprotiques, les auteurs déclinent les structures monomères utilisables, et précisent que les éventuels groupements fonctionnels protiques du ou des monomères doivent être préalablement masqués.

Dans la pratique, les monomères utilisés pour l'électro-synthèse sont distillés avant usage, de façon à éliminer différents additifs, et notamment les inhibiteurs de polymérisation ajoutés par le fabricant pour stabiliser le produit et éviter sa polymérisation dans la bouteille en conditions de stockage.

On notera seulement que la demande de brevet EP-A-0 665 275 mentionne l'utilisation d'inhibiteurs spécifiques pour pouvoir introduire de nouvelles fonctionnalités au bout des chaînes polymères en croissance. Toutefois, il a été démontré, notamment dans l'article de C. Bureau *et al.,* 1996 (pré-cité), que la croissance des chaînes polymères sur la surface est nécessairement anionique, et il est probable que les inhibiteurs radicalaires introduits par les auteurs se retrouvent dans le film en fin de synthèse parce qu'ils sont adsorbés et/ou réduits sur la surface de l'électrode (ils sont en général électro-actifs), et non parce qu'ils interrompent la croissance des chaînes comme indiqué dans la demande de brevet EP-A-0 665 275.

Enfin, et tout récemment, il a également été proposé un procédé de formation de films polymères sur une surface conductrice de l'électricité par électro-greffage, en milieu anhydre, de polymères préformés, et notamment de polyesters, ces polymères étant fonctionnalisés par des groupements pendants électro-greffables tel que des groupements acrylate (Lou et al., American Chemical Society, Langmuir, ASAP articles, 2002, disponible sur le réseau Internet à l'adresse suivante : hLtp://pubs.acs.org/isubscribe/journals/langd5/asap/pdf//la011289g.pdf ; C. Detrembleur et al., Angewandte Chemie International Edition in English, 2001, 40, 1268). Selon les auteurs, cet électro-greffage est réalisé dans des conditions opératoires strictement anhydres. De plus, afin d'obtenir un film de bonne qualité, les auteurs indiquent que le polymère que l'on souhaite électro-greffer doit comporter un nombre minimal de groupements électro-greffables pendants pour l'adsorption des polymères sur la surface métallique puisse avoir lieu. Selon cet article, ce nombre minimal semble correspondre à un taux de substitution supérieur à 40 % environ, c'est-à-dire que 40 % des unités monomères de la chaîne polymérique portent un groupement acrylate. Enfin, il est également indiqué que si la concentration en acrylate du polymère préformé au sein de la solution électrolytique est supérieure à une certaine valeur, alors aucun électro-greffage ne se produit. Cette concentration limite semble dépendre du taux de substitution en groupements acrylate le long de la chaîne, mais semble de l'ordre de 3 mol/l en groupements acrylate.

Du fait de ces limitations sévères portant à la fois sur les solvants et les types de monomères de synthèse, sur la teneur en eau dans le milieu réactionnel, et enfin sur le nombre et la concentration des groupements électro-greffables à utiliser, l'électro-greffage de monomères vinyliques ou de polymères préformés comportant des groupements électro-greffables pendants sur des surfaces conductrices ou semi-conductrices de l'électricité reste un procédé difficilement applicable à l'échelle industrielle.

De plus, l'ensemble de ces conditions - qui portent donc à la fois sur la nature du monomère et sur le milieu réactionnel - sont très restrictives, puisqu'elles excluent un nombre important de macromolécules de la liste des composés pouvant être fixés par électro-greffage, et notamment :
- les macromolécules qui ne sont pas des polymères, au sens strict du terme, c'est-à-dire qui ne constituent pas une macromolécule résultant de la répétition d'un même motif. On peut citer par exemple les macromolécules d'intérêt biologique comme les oligonucléotides et l'ADN, simple ou double brin, l'ARN, simple ou double brin, les oligopeptides, les protéines et notamment les enzymes, les anti-corps ou encore les facteurs de croissance, la cellulose et les celluloses modifiées, les dextranes, les chitosanes et plus généralement les polysaccharides, ainsi que toutes les macromolécules résultant de mélanges ou de ces unités de base (comme, par exemple, les peptido-glycanes, etc...). On peut citer également tous les macro-édifices non polymériques et non strictement macromoléculaires, comme par exemple ceux obtenus par réticulation d'un réseau bi- ou tri-dimensionnel, comme le caoutchouc, etc..., les liposomes et tous les macro-ions ou encore les agrégats minéraux de toutes natures, comme par exemple des billes de silice, des nano-objets (nano-billes, nanotubes, fullerènes, etc...), des cellules vivantes, etc... ;
- les polymères ne résultant pas de la polymérisation ou de la co-polymérisation de monomères vinyliques et/ou de molécules cycliques. Ceci concerne notamment tous les polymères ou co-polymères obtenus par des réactions de condensation, en particulier lorsqu'ils portent des groupements protiques, les polymères ou co-polymères de l'acide lactique, de l'acide glycolique et de l'ε-caprolactone, le nylon et plus généralement les polyamides, les poly-siloxanes, les poly-ortho-esters, les polymères ou co-polymères qui ne peuvent être obtenus que par polymérisation radicalaire - quelle que soit la nature du monomère -, comme le poly-isoprène ou bien les parylènes, ou encore les polymères ou co-polymères obtenus par une polymérisation de type Ziegler-Natta, par réactions de Diels-Alder, etc...

C'est donc afin de remédier à ces problèmes majeurs que la Demanderesse a mis au point ce qui fait l'objet de l'Invention.

Elle s'est notamment donnée pour but de pourvoir à un procédé permettant d'électro-greffer toutes sortes de macro-objets sur des surfaces conductrices ou semi-conductrices de l'électricité et ce à des teneurs en eau au moins cent à mille fois plus élevées, avec un contrôle allégé de l'atmosphère pendant la synthèse, dans des solvants non forcément aprotiques, et avec des réactifs et/ou des solvants non distillés, c'est-à-dire contenant encore leurs éventuels initiateurs.

La présente Invention a donc pour premier objet un procédé de fixation de macro-objets sur une surface conductrice ou semi-conductrice de l'électricité par électro-greffage, caractérisé par le fait qu'il consiste :
a) à préparer une solution électrolytique comprenant, sous forme dissoute, particulaire ou émulsionnée, au moins un macro-objet constitué d'une partie macro-structurale fonctionnalisée par au moins un groupement électro-actif et apte à provoquer l'électro-greffage dudit macro-objet sur ladite surface, ladite solution électrolytique présentant une teneur en protons supérieure ou égale à 50 ppm ; puis
b) à électrolyser ladite solution dans une cellule d'électrolyse en utilisant la surface conductrice ou semi-conductrice à recouvrir comme électrode de travail et au moins une contre électrode, pour conduire, par électro-réduction ou électro-oxydation de ladite solution, à un revêtement greffé dudit macro-objet ou de ses produits de condensation sur ladite surface.

Contrairement à l'enseignement de l'art antérieur qui prohibe la présence de protons lors de réactions d'électro-polymérisation et d'électro-greffage de polymères préformés, le procédé conforme à la présente Invention, qui met obligatoirement en oeuvre une quantité minimale de protons permet, de façon extrêmement surprenante, de conduire à l'électro-greffage de toutes sortes de macro-objets comportant au moins un groupement électro-greffable pendant et ce quelle que soit la concentration de ces groupements au sein de la solution électrolytique.

De façon surprenante, la présence de protons favorise la stabilisation de la couche électro-greffée en croissance et ceci quelle que soit la taille de la chaîne formée par polymérisation des groupements électro-actifs pendants.

De ce fait, le procédé conforme à l'Invention présente non seulement l'avantage d'autoriser l'électro-greffage de macro-objets ou macro-molécules qu'il n'était pas possible d'électro-greffer sur des surfaces conductrices ou semi-conductrices selon les techniques auparavant disponibles pour l'homme de l'art notamment, du fait de leur teneur en protons, mais il permet également d'assouplir les conditions opératoires dans lesquelles cet électro-greffage peut avoir lieu évitant ainsi le recours aux distillations préalables des solvants et réactifs et conduisant ainsi à la faisabilité industrielle de l'Invention.

Ainsi, par ce procédé, il est possible d'obtenir :
- des films organiques qui sont chimiquement greffés sur la surface de l'électrode de travail et dont l'épaisseur peut être ajustée par les conditions de synthèse ; ces films résistent au rinçage, et notamment au rinçage sous ultra-sons ;
- des films organiques couvrants sur toute surface conductrice ou semi-conductrice, pouvant, de façon simultanée, assurer une protection vis-à-vis du milieu extérieur (par exemple contre la corrosion), et/ou offrir un revêtement greffé présentant des groupements fonctionnels organiques utiles pour une post-fonctionnalisation ;
- sur toute surface conductrice ou semi-conductrice de l'électricité, les propriétés, sous forme de film greffé, de tout type de polymère ou de macro-objets.

Selon une forme de réalisation avantageuse du procédé conforme à l'Invention, la teneur en protons varie entre 50 et 100.000 ppm environ.

Les protons de la solution électrolytique peuvent être apportés par les solvants constituant cette solution et/ou par les macro-objets eux-mêmes mis en oeuvre au cours du procédé d'électro-greffage et présents au sein de la solution électrolytique.

Au sens de la présente Invention, on entend par macro-objet toute macro-structure, polymère ou non, fonctionnalisée par au moins un groupement électro-actif (i.e. pouvant être électro-réduit ou électro-oxydé) par polarisation, cathodique ou anodique, dans la solution électrolytique, sur une surface conductrice ou semi-conductrice de l'électricité, et dont le(s) produit(s) de réduction (resp. d'oxydation) forment des liaisons chimiques avec la surface.

Les groupements électro-actifs utilisables selon le procédé conforme à l'Invention, sont de préférence choisis parmi :
- les groupements électrophiles susceptibles de subir une addition nucléophile de la part d'un site de croissance nucléophile d'un polymère électro-initié,
- les groupements nucléophiles susceptibles d'effectuer une addition nucléophile sur un site de croissance électrophile d'un polymère électro-initié.

Parmi les groupements électrophiles, on peut en particulier citer les groupements vinyliques activés par des groupements électro-attracteurs comme, par exemple, les groupements méthacrylate, acrylate, chlorure de vinyle, acrylonitrile, méthacrylonitrile, 4-vinyl pyridine, 2-vinyl pyridine, etc... ou bien par des groupements cycliques clivables par attaque nucléophile ou électrophile, comme les groupements époxy et plus généralement les oxiranes, les lactones, etc...

Parmi les groupements nucléophiles, on peut en particulier citer les groupements vinyliques activés par des groupements électro-donneurs comme, par exemple, le groupement constitué par la 4-vinyl pyridine, la 2-vinyl pyridine, la N-vinyl pyrrolidone, etc... ou bien par des groupements cycliques clivables par attaque nucléophile ou électrophile comme les groupements époxy ou plus généralement les oxiranes.

Il peut s'agir par exemple de tout polymère, réticulé ou non, fonctionnalisé en bout de ou le long de sa chaîne, ou encore dans ses zones de réticulation, ou de toute macromolécule fonctionnalisée - totalement ou partiellement -, ou d'un objet de taille nanométrique, micrométrique ou au-delà, dont la surface a pu être fonctionnalisée par au moins un groupement électrophile (resp. nucléophile) susceptible de subir une addition nucléophile de la part d'un (resp. d'effectuer une addition nucléophile sur un) site de croissance nucléophile (resp. électrophile) d'un polymère électro-initié.

Un macro-objet électrophile peut par exemple être constitué par tout polymère, réticulé ou non, fonctionnalisé en bout de ou le long de sa chaîne, ou encore dans ses zones de réticulation, ou de toute macromolécule fonctionnalisée - totalement ou partiellement - , ou d'un objet de taille nanométrique, micrométrique ou au-delà dont la surface a pu être fonctionnalisée par des groupements vinyliques activés par des groupements électro-attracteurs comme, par exemple, les groupements méthacrylate, acrylate, chlorure de vinyle, acrylonitrile, méthacrylonitrile, 4-vinyl pyridine, 2-vinyl pyridine, etc..., ou bien par des groupements cycliques comme les groupements époxy ou plus généralement les oxiranes ou les lactones telles que l'ε-caprolactone.

Un macro-objet nucléophile peut par exemple être constitué par tout polymère, réticulé ou non, fonctionnalisé en bout de ou le long de sa chaîne, ou encore dans ses zones de réticulation, ou de toute macromolécule fonctionnalisée - totalement ou partiellement - ou d'un objet de taille nanométrique, micrométrique ou au-delà dont la surface a pu être fonctionnalisée par des groupements vinyliques activés par des groupements électro-donneurs comme, par exemple, le groupement constitué par la 4-vinyl pyridine, la 2-vinyl pyridine, la N-vinyl pyrrolidone, etc..., ou bien par des groupements cycliques comme par exemple les groupements époxy, les oxiranes ou les lactones telles que l'ε-caprolactone.

La polarisation peut être obtenue en conditions voltammétriques, potentiostatiques ou intensiostatiques, et délivre des films greffés dudit macro-monomère ou de ses produits de condensation sur la surface de travail.

Le recours à ces macro-objets autorise l'obtention de films électro-greffés contenant la partie macrostructurale. Le greffage a lieu du fait de la présence, sur la partie macro-structurale des groupements électrophiles ou nucléophiles. Ces groupements étant liés à la partie macro-structurale, on obtient l'électro-greffage de cette partie sur la surface.

Les macro-objets pouvant être utilisés conformément à la présente Invention, du fait de la présence de leur groupement(s) fonctionnel(s) électrophile ou nucléophile présentent au moins une des propriétés suivantes :
- le macro-objet est électro-actif, et peut notamment être électro-greffé sur une surface conductrice ou semi-conductrice de l'électricité ;
- le macro-objet est soit susceptible de subir une addition nucléophile de la part d'un site de croissance nucléophile d'un polymère électro-initié, soit est susceptible d'effectuer une addition nucléophile sur un site de croissance électrophile d'un polymère électro-initié ;
- le macro-objet est électropolymérisable.

Selon l'Invention, l'électrolyse de la solution du macro-réactif est réalisée par polarisation en conditions voltammétriques, potentiostatiques ou intensiostatiques.

Lorsque le solvant de synthèse est un solvant organique, il est de préférence choisi parmi la diméthylformamide, l'acétate d'éthyle, l'acétonitrile et le tétrahydrofurane.

Le procédé conforme à l'Invention présente l'avantage de permettre l'utilisation directe de ces solvants sans qu'il ne soit nécessaire de les soumettre à une distillation préalable afin d'éliminer l'eau qu'ils contiennent, ni d'effectuer un contrôle rigoureux de la teneur en eau de l'atmosphère au-dessus du milieu réactionnel. De ce fait, le procédé conforme à l'Invention peut facilement être mis en oeuvre à l'échelle industrielle.

Les macro-objets utilisables selon le procédé conforme à l'Invention sont de préférence choisis parmi les composés de formules suivantes :

A-P

A-P-B

P(A)n

[M(A)]n

A-[M(B)]ₙ

A-[M(B)]ₙ-C

A-P-[M(B)]ₙ

A-P-[M(B)]ₙ-C

dans lesquelles :
- P est une macrostructure choisie parmi :
   ■ les oligomères et les polymères organiques ou inorganiques,
   ■ les polymères obtenus par polycondensation d'un ou de plusieurs réactifs,
   ■ les polysiloxanes, les poly-ortho-esters, les polyphosphates, le parylène et les polymères à base parylène substitué,
   ■ les polymères conducteurs,
   ■ les oligopeptides et les protéines,
   ■ les molécules d'acide nucléique,
   ■ les polysaccharides,
   ■ les porphyrines substituées ou non,
   ■ les phtalocyanines substituées ou non,
   ■ les polymères formés à partir de monomères substitués ou de macromolécules substituées de la liste ci-dessus,
   ■ les pré-polymères, macromères ou téléchéliques basés sur les monomères et/ou macromolécules de la liste ci-dessus,
   ■ les co-polymères et/ou mélanges pouvant être formés à partir de ces polymères, de leurs monomères constitutifs ou des macromolécules ci-dessus, substitués ou non ;
   ■ les macro-édifices non polymériques et non strictement macromoléculaires, comme par exemple ceux obtenus par réticulation d'un réseau bi- ou tri-dimensionnel, comme le caoutchouc, etc...,
   ■ les agrégats minéraux,
   ■ les vésicules lipidiques tels que les liposomes et niosomes et
   ■ les cellules vivantes,
   ■ les objets comportant au moins une surface apte à être fonctionnalisée par au moins un groupement électro-actif, et notamment un groupement électro-greffable ;
- n est un nombre entier supérieur ou égal à 1 ;
- M est une unité monomère constitutive des structures de type P définies ci-dessus lorsque celles-ci sont un polymère ;
- A, B et C, identiques ou différents, sont choisis parmi les groupements fonctionnels électrophiles susceptibles de participer à ou de bloquer la croissance d'une polymérisation anionique et les groupements fonctionnels nucléophiles susceptibles de participer à ou de bloquer la croissance d'une polymérisation cationique, A, B et C étant liés par des liaisons covalente, ionique, dative ou par liaison hydrogène avec la partie macro-structurale P ou la partie monomérique M.

Parmi les polymères définis pour P, on peut notamment citer les polymères vinyliques, réticulés ou non, tels que par exemple les polymères de l'acrylonitrile, du méthacrylonitrile, du méthyl méthacrylate, de l'éthyl méthacrylate, du propyl méthacrylate, du butyl méthacrylate, de l'hydroxyéthyl méthacrylate, de l'hydroxypropyl méthacrylate, des cyano acrylates, de l'acide acrylique, de l'acide méthacrylique, du styrène et de ses dérivés, de la N-vinyl pyrrolidone, des halogénures de vinyle et les polyacrylamides ; les polymères de l'isoprène, de l'éthylène, du propylène, de l'oxyde d'éthylène et des molécules à cycle clivable par attaque nucléophile ou électrophile telles que les lactones et en particulier l'ε-caprolactone.

Parmi les polymères obtenus par polycondensation d'un ou de plusieurs réactifs, on peut en particulier citer les polymères et co-polymères de l'acide lactique ou de ses oligomères, des lactones et en particulier de l'ε-caprolactone, de l'acide glycolique, de l'éthylène glycol, les polyamides, les polyuréthanes, les poly-ortho-esters et les polyaspartates.

Parmi les polymères conducteurs, on peut notamment citer ceux à base d'aniline, de thiophène ou d'éthylènedioxythiophène (EDOT), de pyrrole, de leurs analogues et de leurs dérivés substitués.

Parmi les protéines, on peut en particulier citer les antigènes, les enzymes, les facteurs de croissance, les anti-corps et les collagènes.

Parmi les molécules d'acide nucléique, on peut notamment citer l'ADN simple et double brin et l'ARN simple et double brin.

Parmi les polysaccharides, on peut en particulier mentionner à titre d'exemple la cellulose et les celluloses substituées, les chitosanes et chitosanes substitués ou fonctionnalisés, les dextranes et dextranes substitués ou fonctionnalisés, les amyloses, les pectines, l'amidon et l'héparine.

Parmi les agrégats minéraux, on peut en particulier citer les billes de silice et plus généralement d'oxydes, ainsi que les nano-objets de toutes natures (nano-billes, nanotubes, fullerène, etc...).

Parmi les objets ayant au moins une surface apte à être fonctionnalisée par au moins un groupement électro-actif, on peut citer les objets non liquides et non gazeux ayant au moins une surface conductrice, semi-conductrice ou isolante de l'électricité, choisie parmi les surfaces métalliques, organiques minérales, telles que le bois, le verre, le plastique, les fibres végétales, les matières kératiniques, les gels organiques ou minéraux, leurs composites ou leurs mélanges.

Le nombre maximal pouvant être défini pour n n'est pas critique selon l'Invention et dépend du nombre de fonctions présentes sur la partie macro-structurale aptes à être fonctionnalisées par un groupement électro-actif.

Parmi les groupements fonctionnels A, B et C, on peut notamment citer les acides et bases de Lewis portant - respectivement - une lacune (et notamment les groupements contenant les éléments B ou Al, les métaux de transition ionisés ou non, les terres rares...) ou un doublet électronique (et notamment les groupements contenant les éléments N, O, S, les anions et notamment les groupements carboxylates, sulfates, sulfonates, phosphates, phosphonates...) ; les groupements fonctionnels organiques polymérisables par voie anionique tels que les groupements vinyliques comme le méthacrylate, l'acrylate, l'acroléine, l'acrylonitrile, le méthacrylonitrile, les cyanoacrylates, les halogénures de vinyle, le styrène et ses dérivés, la 2- et 4-vinyl pyridine et leurs dérivés, les vinylimidazoles et leurs dérivés, etc... ; les molécules à cycle clivable par attaque nucléophile telles que les oxiranes et les lactones, les groupements fonctionnels organiques polymérisables par voie cationique tels que les groupements N-vinyl pyrrolidone, la 2- et la 4-vinyl pyridine, le styrène et ses dérivés, etc... ; et les molécules à cycle clivable par attaque électrophile, notamment les oxiranes et les lactones.

A titre d'exemple P(A)ₙ désigne donc une macro-structure P telle que définie ci-dessus fonctionnalisée par n groupements électrophiles ou nucléophiles A adéquats.

De façon à obtenir simplement des macro-objets électrophiles, on pourra par exemple fonctionnaliser tout polymère ou macro-structure par des groupements vinyliques électro-activés.

Cette fonctionnalisation peut, par exemple, être réalisée en exploitant la réaction de ces groupements hydroxyles avec le chlorure de méthacryloyle (MAC) pour former des esters méthacryliques, qui apporteront un groupement électrophile méthacrylate à la macro-structure, et lui permettront d'être électro-greffée selon le procédé conforme à la présente Invention selon le schéma 2 ci-après : 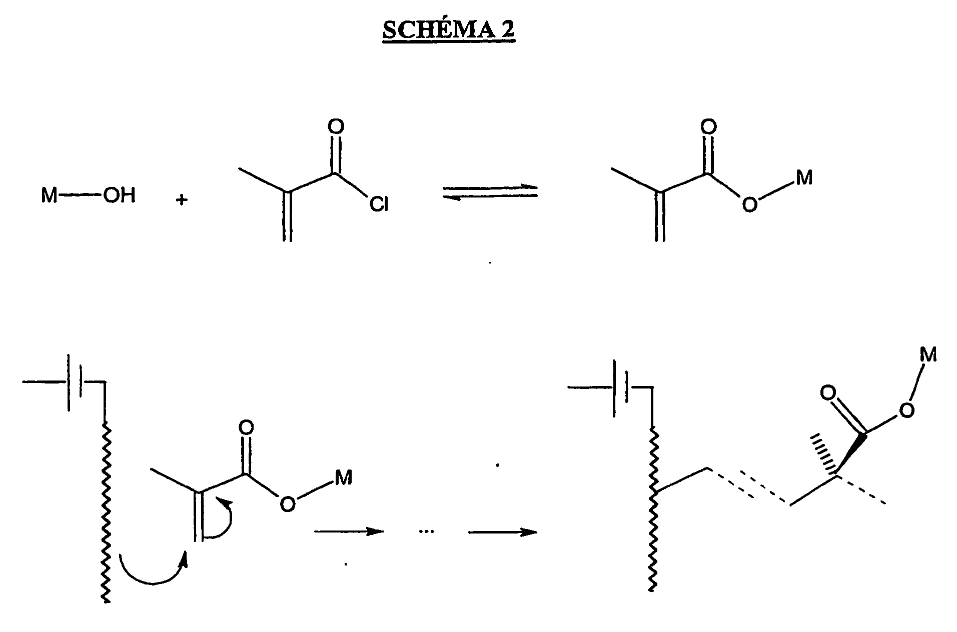 dans lequel M a la signification indiquée ci-dessus.

Le même type de réactions peut par exemple être envisagé avec le méthacrylate de glycidyle à la place du chlorure de méthacryloyle.

On peut également considérer l'utilisation de molécules pouvant servir d'éléments espaceurs, comme les di-isocyanates, l'épichlorhydrine, et plus généralement toutes les molécules bi-fonctionnelles, pour obtenir la formation d'une liaison covalente entre un monomère vinylique et une macrostructure.

Selon une première variante du procédé conforme à l'Invention, le macro-objet comporte au moins un groupement fonctionnel organique électrophile.

Selon cette première variante, l'électro-greffage du macro-objet est réalisé par électro-réduction sur la surface conductrice ou semi-conductrice de l'électricité qui sert alors de cathode.

La concentration du macro-objet électrophile au sein de la solution électrolytique est de préférence comprise entre 10⁻⁶ et 5 mol/l.

Selon une forme de réalisation avantageuse de cette première variante, la solution organique contient un solvant qui peut être choisi parmi les solvants tels que définis précédemment.

Selon une autre forme de réalisation avantageuse de cette première variante, la solution organique renferme au moins un électrolyte support pouvant notamment être choisi parmi les sels d'ammoniums quaternaires tels que les perchlorates, les tosylates, les tetrafluoroborates, les hexafluorophosphates, les halogénures d'ammoniums quaternaires, le nitrate de sodium et le chlorure de sodium.

Parmi ces sels d'ammoniums quaternaires on peut en particulier citer à titre d'exemple le perchlorate de tetraéthylammonium (TEAP), le perchlorate de tetrabutylammonium (TBAP), le perchlorate de tetrapropylammonium (TPAP), le perchlorate de benzyltriméthylammonium (BTMAP).

Lorsque le macro-objet électrophile utilisé est électropolymérisable, il peut alors constituer la seule espèce électro-active dans le solvant de synthèse.

Dans ce cas, le greffage et la croissance du film ont lieu sur la cathode dès que son potentiel est supérieur, en valeur absolue, au potentiel d'électro-réduction du groupement fonctionnel électrophile.

Ce potentiel varie en fonction de la nature du groupement électrophile, et - pour un groupement électrophile donné - de la partie macro-structurale du macro-objet électrophile.

A titre d'exemple, et lorsque le macro-objet électrophile est constitué par un polyéthylène glycol (PEG) di-méthacrylate, fonctionnalisé à ses deux extrémités par des groupements méthacrylate, alors l'électro-réduction est conduite en conditions voltamétriques, avec un potentiel final situé entre -2,7 et -3,4 V/(Ag⁺/Ag) (mesuré sur électrode d'or dans la diméthylformamide (DMF) en présence de TEAP), selon la masse molaire de la partie PEG centrale.

Dans le cas où le macro-objet électrophile est non polymérisable, la solution de synthèse peut alors contenir, en plus du macro-objet électrophile, un ou plusieurs monomères électropolymérisables, choisis notamment parmi ceux qui constituent le groupement électrophile d'intérêt du macro-objet électrophile. Dans ce cas, ces monomères peuvent être utilisés en lieu et place du solvant.

Dans ce cas, le greffage et la croissance du film ont lieu sur la cathode dès que son potentiel est supérieur, en valeur absolue, au potentiel le moins cathodique des deux potentiels constitués par :
(i) le potentiel de réduction du macro-objet électrophile ;
(ii) le potentiel de réduction du monomère électropolymérisable.

Dans le cas où le milieu de synthèse contient un macro-objet électrophile non polymérisable et au moins un monomère polymérisable, le greffage et la croissance du film ont lieu sur la cathode dès que son potentiel est supérieur, en valeur absolue, au potentiel de réduction du monomère polymérisable, l'accrochage du macro-monomère intervenant au travers d'une réaction de terminaison de la croissance des chaînes formées à partir du monomère.

Ce potentiel peut être obtenu :
- soit en polarisant cathodiquement l'électrode de travail à la valeur adéquate par rapport à une électrode de référence (par exemple une électrode d' argent) ;
- soit en polarisant cathodiquement l'électrode de travail par rapport à une contre-électrode, de façon à ce que son potentiel - mesuré par rapport à une électrode de référence - soit correct ;
- soit en imposant un courant dans un circuit électrique dont la surface à traiter est l'une des électrodes (de préférence la cathode), de façon à ce que le potentiel de cette surface soit correct.

Selon une seconde variante du procédé conforme à l'Invention, le macro-objet comporte au moins un groupement fonctionnel organique nucléophile.

Selon cette seconde variante, l'électro-greffage du macro-objet est réalisé par électro-oxydation sur la surface conductrice ou semi-conductrice de l'électricité qui sert alors d'anode.

La concentration du macro-objet nucléophile est de préférence comprise entre 10⁻⁶ et 5 mol/l.

Selon une forme de réalisation avantageuse de cette seconde variante, la solution organique contient un solvant qui peut être choisi parmi les solvants tels que définis précédemment.

Selon une autre forme de réalisation avantageuse de cette seconde variante, la solution organique renferme au moins un électrolyte support pouvant notamment être choisi parmi les sels d'ammoniums quaternaires tels que ceux décrits précédemment.

Lorsque le macro-objet nucléophile utilisé est électropolymérisable, il peut alors constituer la seule espèce électro-active dans le solvant de synthèse.

Dans ce cas, le greffage et la croissance du film ont lieu sur l'anode dès que son potentiel est supérieur, en valeur absolue, au potentiel d'électro-oxydation du groupement fonctionnel nucléophile.

Ce potentiel varie en fonction de la nature du groupement nucléophile, et - pour un groupement nucléophile donné - de la partie macromoléculaire du macro-réactif nucléophile.

Dans le cas où le macro-objet nucléophile est non polymérisable, la solution de synthèse peut alors contenir, en plus du macro-objet nucléophile, un ou plusieurs monomères électropolymérisables, choisis notamment parmi ceux qui constituent le groupement nucléophile d'intérêt du macro-objet nucléophile. Dans ce cas, ces monomères peuvent être utilisés en lieu et place du solvant.

Dans ce cas, le greffage et la croissance du film ont lieu sur l'anode dès que son potentiel est inférieur, en valeur absolue, au potentiel le plus anodique des deux potentiels constitués par :
(i) le potentiel d'oxydation du macro-objet nucléophile ;
(ii) le potentiel d'oxydation du monomère électropolymérisable.

Dans le cas où le milieu de synthèse contient un macro-objet nucléophile non polymérisable et au moins un monomère polymérisable, le greffage et la croissance du film ont lieu sur l'anode dès que son potentiel est supérieur, en valeur absolue, au potentiel d'oxydation du monomère polymérisable, l'accrochage du macro-monomère intervenant au travers d'une réaction de terminaison de la croissance des chaînes formées à partir du monomère.

Ce potentiel peut être obtenu :
- soit en polarisant anodiquement l'électrode de travail à la valeur adéquate par rapport à une électrode de référence (par exemple une électrode d'argent) ;
- soit en polarisant anodiquement l'électrode de travail par rapport à une contre-électrode, de façon à ce que son potentiel - mesuré par rapport à une électrode de référence - soit correct ;
- soit en imposant un courant dans un circuit électrique dont la surface à traiter est l'une des électrodes (de préférence l'anode), de façon à ce que le potentiel de cette surface soit correct.

Dans tous les cas (macro-objet électrophile ou nucléophiles) l'électrode de travail et la contre-électrode peuvent être :
- au contact de la même solution ou bien de solutions différentes ;
- placées dans un seul compartiment ou bien dans des compartiments séparés.

De façon générale, on observe que les courants voltammétriques sont plus faibles lorsque la masse molaire de la partie centrale macro-structurale augmente, toutes choses étant égales par ailleurs. Ceci pourrait être relié à la viscosité croissante du milieu réactionnel, et conduirait à préférer des potentiels Efinal de plus en plus cathodiques à mesure que la viscosité de la solution électrolytique augmente.

La présente Invention a par ailleurs pour objet les surfaces conductrices ou semi-conductrices de l'électricité obtenues en mettant en oeuvre le procédé décrit ci-dessus et dont au moins une face est recouverte par un revêtement greffé d'un macro-objet tel que défini ci-dessus.

De manière générale, ce revêtement a une épaisseur au moins égale à la taille de la plus grosse partie macro-structurale contenue dans le macro-objet.

Selon une forme de réalisation préférée de l'Invention, ce revêtement présente une épaisseur comprise entre 1 nm et 10 µm.

Il peut notamment se présenter sous la forme d'un film polymère, d'un film organique d'une macromolécule biologique, d'un tapis de billes ou de nanotubes, d'un tapis cellulaire vivant, etc...

Parmi ces surfaces, on peut notamment citer les surfaces métalliques telles que l'or sous forme de lames ou de plots, l'argent, le platine, le fer, le chrome, l'aluminium, les alliages tels que l'acier ou les inox, le titane, les polymères conducteurs, ainsi que les surfaces semi-conductrices de l'électricité telles que le silicium dopé ou non, le nitrure de titane, le nitrure de tungstène, le nitrure de tantale, l'oxyde de titane, les surfaces de polymères conducteurs ou de revêtements obtenus à partir de sels d'aryldiazonium, etc...

Enfin, dans le cas où le macro-objet est un objet de taille macroscopique dont au moins une partie de sa surface a pu être recouverte d'un film contenant des groupements vinyliques activés (soit avec le procédé de la présente Invention, soit par un autre procédé, comme par exemple les procédés décrits dans la demande de brevet FR-A-2 781 232 ou dans la demande internationale WO 98/55162, on peut utiliser le procédé de la présente Invention pour faire de "l'électro-collage" en posant ladite surface sur la surface conductrice ou semi-conductrice d'intérêt, et ainsi obtenir la fixation de ladite surface sur la surface d'intérêt.

L'Invention a donc également pour objet l'utilisation du procédé conforme à l'Invention et tel que décrit ci-dessus pour l'électro-collage de macro-objets sur une surface conductrice ou semi-conductrice de l'électricité.

Outre les dispositions qui précèdent, l'Invention comprend encore d'autres dispositions qui ressortiront de la description qui va suivre, qui se réfère à un exemple de formation d'un film polymère par électro-greffage du PEG-diméthacrylate à la surface d'une électrode d'or, à un exemple démontrant que le procédé d'électro-greffage conforme à l'Invention peut être réalisé dans un solvant organique renfermant au moins 100 ppm d'eau, à un exemple comparatif de préparation d'un film polymère de poly(PEG-diméthacrylate)-co-méthacrylate de méthyle à la surface d'une lame d'or, à un exemple de formation de films de poly(polydiméthylsiloxane-méthacrylate) à la surface d'une électrode d'or, et à un exemple de formation d'un film de dextrane/méthacrylate à la surface d'une électrode d'or ainsi qu'aux figures annexées dans lesquelles :
- la figure 1 représente les spectres infrarouges (IR) avant et après différents rinçages, lorsqu'une lame d'or est simplement recouverte par un film polymère obtenu par simple trempage de celle-ci (sans étape d'électro-greffage) dans une solution PEG330 diméthacrylate, à 0,04 mol/l dans la DMF ;
- la figure 2 représente les spectres infrarouges (IR) de lames d'or sur lesquelles des films polymères de différents PEG diméthacrylate (PEG330, PEG550 et PEG875) ont été électro-greffés conformément au procédé conforme à l'Invention ;
- la figure 3 représente les voltammogrammes de solvants renfermant des teneurs en eau croissantes lors de l'électro-greffage du PEG 550 diméthacrylate à surface d'une lame d'or ;
- la figure 4 qui représente les voltammogrammes de diverses solutions (Solution A : méthacrylate de méthyle (MMA) à 5 mol/l + PEG550 diméthacrylate 10 % en volume ; Solution B : MMA 10 % en volume + PEG550 diméthacrylate 1 mol/l ; Solution C : MMA seul à 5 mol/l et Solution D : PEG550 diméthacrylate seul à 1 mol/l) lors d'essais de formation d'un film polymère à la surface d'une lame d'or ;
- la figure 5 représente les spectres IR des films polymères obtenus en mettant en oeuvre les solutions A à D décrites ci-dessus ;
- la figure 6 représente le spectre IR d'une surface d'or recouverte d'un film de polydiméthylsiloxane-méthacrylate électro-greffé par polarisation cathodique ;
- la figure 7 représente la zone Si2s du spectre XPS d'une surface d'or recouverte d'un film de polydiméthylsiloxane-méthacrylate électro-greffé par polarisation cathodique ;
- la figure 8 représente les spectres IRAS d'un film obtenu par simple trempage d'une lame d'or dans une solution de dextrane-GMA, avant et après rinçage dans l'eau ;
- la figure 9 représente les spectres IRAS d'un film obtenu par électro-greffage de dextrane-GMA sur une lame d'or, avant et après rinçage dans l'eau.

### EXEMPLE 1 : FORMATION D'UN FILM POLYMÈRE PAR ELECTRO-GREFFAGE D'UN MACRO-ÉLECTROPHILE ÉLECTRO-ACTIF ET POLYMÉRISABLE : LE PEG-DIMÉTHACRYLATE.

Le but de cet exemple est de démontrer que l'on peut réaliser l'électro-greffage d'un macro-électrophile, c'est-à-dire d'une molécule portant au moins un groupement électrophile lié de façon covalente à une partie macromoléculaire non électro-active en présence d'au moins 100 ppm de protons et que cette condition est nécessaire à l'obtention d'un film greffé ayant une certaine épaisseur.

Le macro-électrophile utilisé est un PEG-diméthacrylate (PEG 330) de formule suivante (I) : 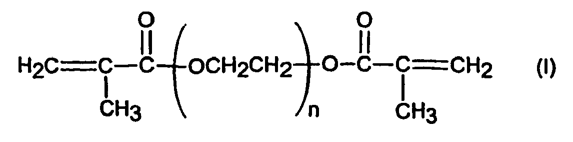 avec n = 4, 9 ou 16.

Pour cela, on montre tout d'abord que le macro-électrophile n'est pas greffé lorsqu'il est simplement exposé à la surface d'une électrode d'or, mais qu'il est greffé après polarisation de cette électrode en régime cathodique.

Pour ce faire, on trempe, pendant 10 minutes, une lame de microscope en verre recouverte d'or par évaporation sur une sous-couche de chrome, dans une solution à 0,04 mol/l de PEG330 diméthacrylate (formule (I) avec n = 4) dans la diméthylformamide (DMF).

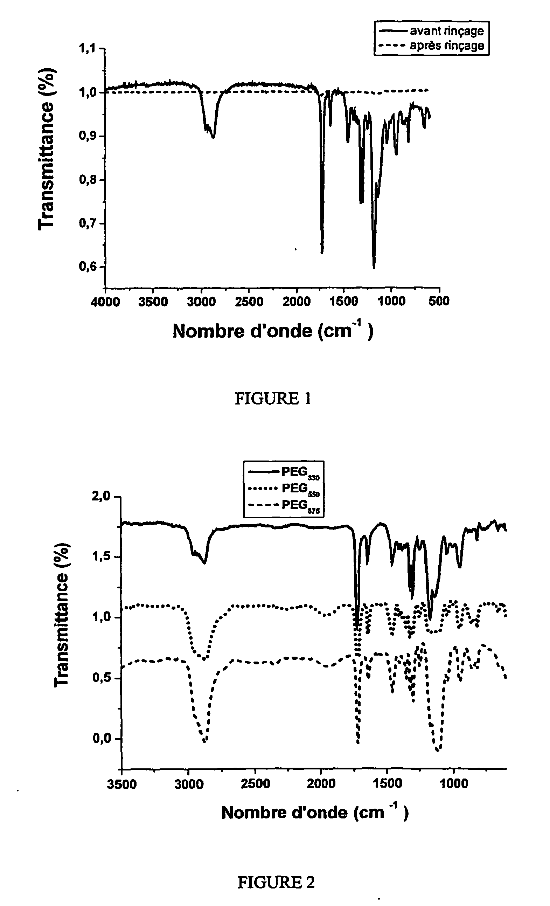

La figure 1 en annexe représente les spectres infrarouges (IR) de la lame d'or avant puis après rinçage pendant 2 minutes dans l'acétone en présence d'ultrasons, puis pendant 2 minutes dans l'eau en présence d'ultrasons. Sur cette figure, la transmittance (%) est exprimée en fonction du nombre d'ondes (cm⁻¹).

On observe la disparition complète des pics caractéristiques du PEG330 diméthacrylate, et notamment de la bande carbonyle à 1740 cm⁻¹, sous l'effet du rinçage.

Ces résultats montrent donc qu'il n'est pas possible de greffer de façon durable un macro-électrophile sur une surface en or, par simple trempage de ladite surface dans une solution de ce macro-électrophile.

A titre comparatif, et conformément au procédé selon l'Invention, on effectue l'électro-greffage de trois PEG diméthacrylates de formule (I) sur une lame en or (PEG 330 : n = 4 ; PEG550 : n = 9 et PEG 875 : n = 16).

Pour ce faire, on polarise une lame d'or, identique à celle utilisée précédemment, dans une solution à 0,04 mol/l de PEG di-méthacrylate (PEG 330 ; PEG 550 ou PEG 875) dans la DMF à 5.10⁻² mol/l de perchlorate de tetraéthyl ammonium (TEAP), selon le protocole de potentiel suivant: conditions voltammétriques avec 10 balayages de Eᵢₘₜᵢₐₗ = - 0,5 V/(Ag⁺/Ag) à E_{final} = - 2,7 V/(Ag⁺/Ag) à une vitesse de 100 mV/s.

Dans cet exemple, il est important de noter que les PEG diméthacrylates, ainsi que la DMF ont été utilisés tels que reçus du fabricant, i.e. notamment sans distillation préalable (l'inhibiteur de polymérisation du produit est donc encore présent, et la teneur en protons du milieu est supérieure à 50 ppm).

Les lames sont ensuite rincées à l'acétone puis à l'eau selon le protocole décrit ci-dessus.

Les spectres IR des lames après rinçage sont reportés sur la figure 2 annexée qui représente la transmittance (%) en fonction du nombre d'ondes (cm⁻¹).

On observe, après rinçage, des films de 100 nm d'épaisseur, ayant les caractéristiques des poly(PEG di-méthacrylate).

### EXEMPLE N°2: PRÉPARATION DE FILMS DE POLY(PEG DIMÉTHACRYLATE ÉLECTRO-GREFFÉ EN PRÉSENCE D'UNE CONCENTRATION CROISSANTE EN EAU.

Le but de cet exemple est de démontrer que la présence d'eau pendant la phase de polarisation n'est pas préjudiciable à la qualité des films obtenus conformément à l'Invention mais qu'au contraire elle est nécessaire à l'obtention de bonne qualité et de gammes d'épaisseur voulues.

On polarise une lame d'or dans une solution à 1 mol/l de PEG 550 diméthacrylate dans la DMF à 5.10⁻² mol/l de TEAP.

La teneur en eau du milieu de synthèse est ajustée avant chaque polarisation par ajouts de volumes d'eau distillée dans la solution, puis mesurée par la méthode de Karl Fischer.

Des teneurs en eau variant de 500 ppm à 4500 ppm ont été testées.

Le protocole de potentiel est le suivant : conditions voltammétriques avec 10 balayages de Eᵢₙᵢₜᵢₐₗ =- 0,7 V/(Ag⁺/Ag) à E_{final}= - 2,7 V/(Ag⁺/Ag) à une vitesse de 100 mV/s.

Les lames sont ensuite rincées à l'acétone et à l'eau selon le protocole décrit ci-dessus à l'exemple 1.

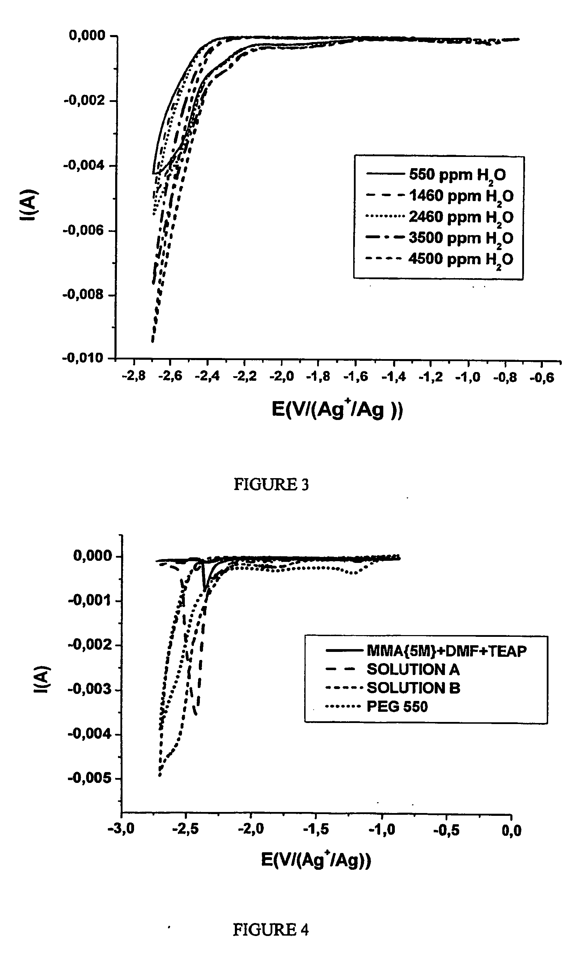

Les premiers voltammogrammes de chacune des teneurs en eau testées sont indiqués sur la figure 3 sur laquelle l'intensité en ampères est exprimée en fonction du potentiel de la contre électrode Ag⁺/Ag.

On constate que les intensités sont globalement d'autant plus importantes que la teneur en eau est élevée.

On observe pourtant, après rinçage à l'acétone et à l'eau, des films organiques dont la structure (IR) est compatible avec le poly(PEG-diméthacrylate) et dont les épaisseurs, mesurée par profilométrie, sont résumées dans le Tableau I ci-après :

**TABLEAU I**

| **Teneur en eau** **{ppm}** | **Transmittance** **C=O (%)** | **Épaisseur** **(nm)** |
|---|---|---|
| **< 50** | 27 | 44 |
| **500** | 13 | 70 |
| **1460** | 13 | 70 |
| **2460** | 30 | 100 |
| **3500** | 30 | 100 |
| **4500** | 29 | 45 |

Dans le cadre particulier de l'électro-greffage du poly(PEG-diméthacrylate), ces résultats montrent tout d'abord que lorsque la teneur en eau du milieu réactionnel est inférieure à 50 ppm le film polymère greffé présente une épaisseur inférieure à celle qui est observé pour le film greffé en présence d'une quantité d'eau comprise entre 500 et 3500 ppm.

Ces résultats démontrent également que l'on parvient encore à greffer un film de près de 50 nm d'épaisseur à 4500 ppm d'eau, ce qui laisse envisager que l'on peut obtenir un greffage simplement détectable à des teneurs en eau ou en solvant protique bien plus élevées encore. Il doit cependant être bien entendu que la quantité maximale de protons à utiliser selon le procédé conforme à l'Invention pourra varier dans de larges proportions en fonction de la nature du macro-objet que l'on souhaite électro-greffer.

On constate que l'électro-greffage du macro-réactif électrophile PEG550 di-méthacrylate permet d'obtenir des films polymères greffés dans des conditions de teneur en eau bien plus élevées que celles admissibles pour les stricts monomères électro-greffables, comme le méthyl méthacrylate (MMA) par exemple, et tout à fait intéressantes pour la mise en oeuvre du procédé conforme à l'Invention au niveau industriel.

On observe en effet qu'au delà de 900 ppm d'eau, la teneur en eau est supérieure à la teneur en électrolyte support (5.10⁻² mol/l), et que la DMF de qualité « standard » (i.e. non ultra-pure) du commerce a une teneur en eau - à réception - de l'ordre de 300 ppm.

Ces résultats, combinés aux précédents, illustrent le bénéfice pratique, dans le cadre d'une utilisation de l'électro-greffage de polymères à des fins industrielles, à avoir recours à des macro-objets électrophiles ou nucléophiles du type de ceux indiqués dans la présente Invention.

### EXEMPLE N°3: PRÉPARATION DE FILMS ORGANIQUES PAR ELECTRO-GREFFAGE DU POLY(PEG-DIMÉTHACRYLATE)-CO-MÉTHACRYLATE DE MÉTHYLE.

On polarise une lame d'or dans diverses solutions à 5.10⁻² mol/l de TEAP dans la DMF :
Solution A : méthacrylate de méthyle (MMA) à 5 mol/l + PEG550 di-méthacrylate 10 % en volume ;
Solution B : MMA 10 % en volume + PEG550 di-méthacrylate 1 mol/l;
Solution C : MMA seul à 5 mol/l;
Solution D : PEG550 di-méthacrylate seul à 1 mol/l.

Dans cet exemple la teneur en protons du milieu réactionnel est supérieure à 50 ppm.

Le protocole de potentiel est le suivant : conditions voltammétriques avec 10 balayages de Eᵢₙᵢₜᵢₐₗ = - 0,7 V/(Ag⁺/Ag) à E_{final} = - 2,7 V/(Ag⁺/Ag) à une vitesse de 100 mV/s.

Les premiers voltammogrammes de chacune des diverses solutions A à D sont indiqués sur la figure 4 sur laquelle l'intensité en ampères est exprimée en fonction du potentiel de la contre électrode Ag⁺/Ag.

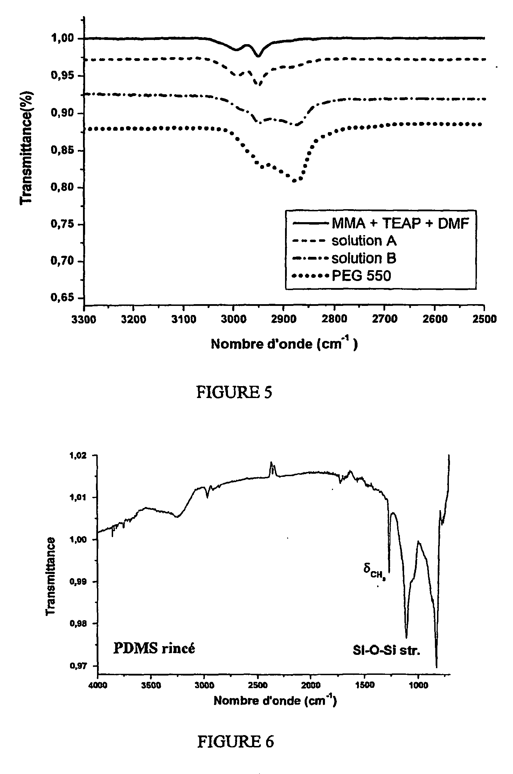

La zone 2500-3300 cm⁻¹ des spectres IR des films obtenus correspondants, représentée sur la figure 5 (transmittance (%) exprimée en fonction du nombre d'ondes (cm⁻¹) ; les lignes de base ont été décalées pour en faciliter la lecture), montre la co-polymérisation du MMA et du PEG550 di-méthacrylate dans des proportions relatives compatibles avec les solutions de départ.

Les spectres IR des films obtenus montrent en effet que la proportion relative de PEG et de PMMA observée est conforme à la composition du mélange initial, et notamment du rapport entre MMA et PEG, et confirme que le procédé conforme à l'Invention permet d'obtenir des co-polymères PEG/PMMA électro-greffés en présence d'une teneur en protons supérieure ou égale à 50 ppm.

Ces résultats montrent également que l'électro-greffage du MMA seul peut avoir lieu dès - 2,5 V/(Ag+/Ag), alors que l'électro-greffage du PEG-diméthacrylate n'est obtenu qu'au-delà de - 2,7 V/(Ag+/Ag).

On observe qu'il est toutefois possible d'obtenir des films organiques électro-greffés dans les deux cas, ce qui semble indiquer que l'électro-greffage du PEG-diméthacrylate sur la surface peut être dû :
- soit à l'électro-greffage direct du PEG-diméthacrylate, du fait de son électro-activité (cas d'une polarisation à des potentiels plus cathodiques que - 2,7 V/(Ag+/Ag)) ;
- soit à l'électrophilie des groupements méthacrylate du PEG-diméthacrylate : le macro-électrophile est donc « capté » par la chimie de croissance consécutive à l'électro-greffage du MMA (cas d'une polarisation à des potentiels moins cathodiques que - 2,7 V/(Ag+/Ag)).

Les films obtenus avec les solutions A et B ont une épaisseur d'environ 90 nm.

### EXEMPLE N°4: PRÉPARATION DE FILMS DE POLY(POLYDIMETHYLSILOXANE-MÉTHACRYLATE) ÉLECTRO-GREFFÉS.

Le but de cet exemple est de démontrer que l'on peut réaliser l'électro-greffage d'un macro-électrophile ne comportant qu'un seul groupement électro-actif et ce en présence d'une teneur en protons supérieure à 100 ppm. Outre le macro-monomère utilisé ici, les différences essentielles avec l'exemple n°1 ci-dessus sont :
(i) que le macro-monomère ne porte qu'une seule fonction électrophile électro-active (une fonction méthacrylate) ;
(ii) que la partie macromoléculaire est de masse bien plus élevée (Mw = 10000).

Le macro-électrophile utilisé est un polydiméthylsiloxane (PDMS) -méthacrylate, de formule H₂C=C(CH₃)C(=O)-O-(Si(CH₃)₂-O-)ₙH, avec n = 134.

On polymérise, par polarisation cathodique, une lame d'or identique à celle utilisée à l'exemple 1 ci-dessus dans une solution à 0,05 mol/l de PDMS-méthacrylate (10 g) dans l'acétate d'éthyle (50 ml) à 5.10⁻² mol/l de tétrafluoro borate de tétraéthyl ammonium (TATB), en conditions potentiostatiques selon le protocole suivant : E_{fixe} = - 3,2 V/(Ag⁺/Ag) pendant 2 400 secondes.

La lame d'or est ensuite rincée à l'acétone puis à l'eau, selon le protocole décrit ci-dessus à l'exemple 1.

La figure 6 annexée représente le spectre IR de la surface d'or recouverte du film de PDMS-méthacrylate électro-greffé par polarisation cathodique ; la transmittance (%) étant exprimée en fonction du nombre d'ondes (cm⁻¹).

On observe, après rinçage, un film électro-greffé de 110 nm d'épaisseur, ayant les caractéristiques infra-rouge du PDMS.

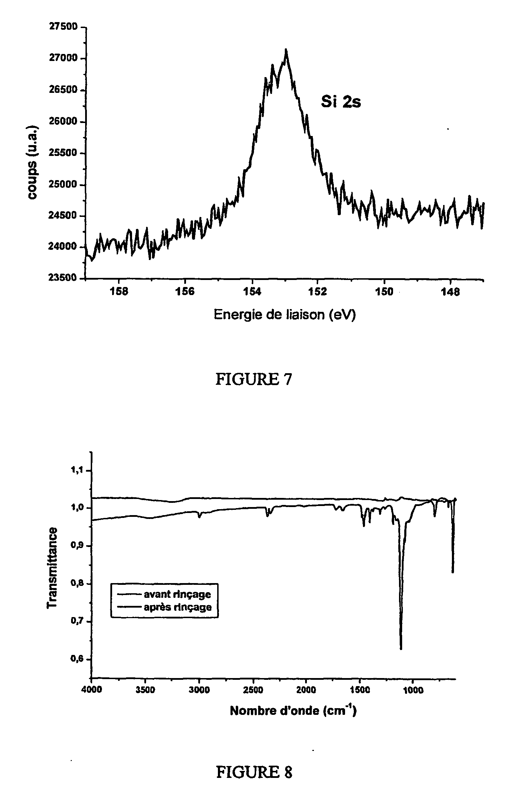

L'analyse XPS de la lame, qui est représentée sur la figure 7 annexée et qui montre la présence de silicium sur la surface, confirme ce résultat (nombre de coups (u.a.) en fonction de l'énergie de liaison (eV)).

### EXEMPLE N°5: PRÉPARATION D'UN FILM DE DEXTRANE/MÉTHACRYLATE ÉLECTRO-GREFFÉ.

Le but de cet exemple est de démonter que l'on peut réaliser un film électro-greffé à partir d'un macro-électrophile constitué par du dextrane fonctionnalisé par des groupements glycidyl-méthacrylate (GMA). Cet exemple illustre l'Invention dans un domaine spécifique : celui où le macro-électrophile est bien une macromolécule déjà existante mais n'est pas un polymère.

Le macro-électrophile considéré, nommé dextrane-GMA, est représenté par la formule ci-après :

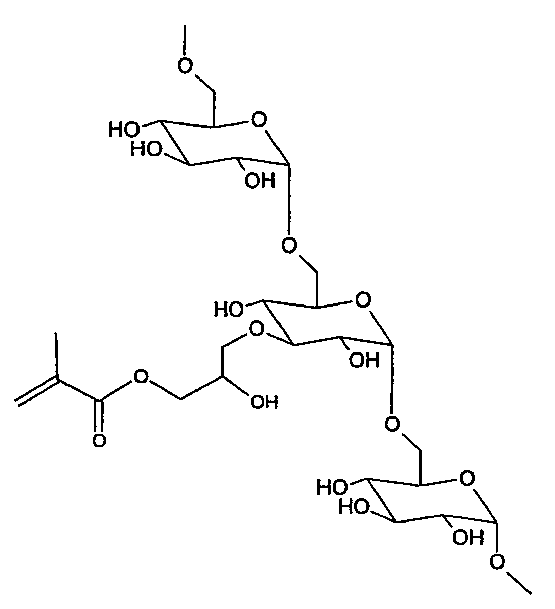

Dans la formule ci-dessus, et par souci de clarté, seul un hydroxyle a été indiqué comme substitué par le GMA. La proportion varie en fait en fonction des conditions de synthèse.

Le dextrane-GMA est obtenu à partir d'un dextrane de masse M = 15000 et de méthacrylate de glycidyl (2,3-epoxypropyl méthylpropénoate), selon le protocole décrit dans W.N.E. par van Dijk-Wolthuis, O. Franssen, H. Talsma, M.J. van Steenbergen, J.J. Kettenes-van den Bosch, W.E. Hennink, Macromolecules, 1995, 28, 6317.

L'analyse du produit par RMN ¹H et ¹³C (non représentée) montre que le dextrane-GMA est obtenu avec un degré de substitution de 77 %.

On réalise une solution, dite solution de dextrane-GMA, en dissolvant 0,25 g du dextrane-GMA dans 50 ml de DMF à 10⁻² mol/l en TEAP. La solution est donc environ à 3,3.10⁻⁴ mol/l en dextrane-GMA.

On prépare quelques surfaces d'or, appelées lames d'or, en pulvérisant de l'or par effet Joule sur des lames de verres pré-traitées avec un voile de chrome.

On réalise un premier échantillon en trempant une lame d'or dans la solution de dextrane-GMA.

La lame est analysée (IRAS) avant et après rinçage à l'eau pendant 5 minutes sous agitation, à raison d'environ 2 ml/cm².

Les résultats obtenus sont représentés sur la figure 8 sur laquelle la transmittance (%) est exprimée en fonction du nombre d'onde (cm⁻¹).

On observe que le film de dextrane-GMA obtenu par simple trempage disparaît après rinçage.

On réalise ensuite selon le procédé conforme à l'Invention, l'électro-greffage du dextrane-GMA sur une lame d'or utilisée comme électrode de travail d'un montage à trois électrodes, dans la solution de dextrane-GMA, selon le protocole de potentiel suivant : conditions voltammétriques avec 15 balayages de Eᵢₙᵢₜᵢₐₗ = -0,6 V/(Ag⁺/Ag) à E_{final} =-2,8 V/(Ag⁺/Ag) à une vitesse de -100 mV/s.

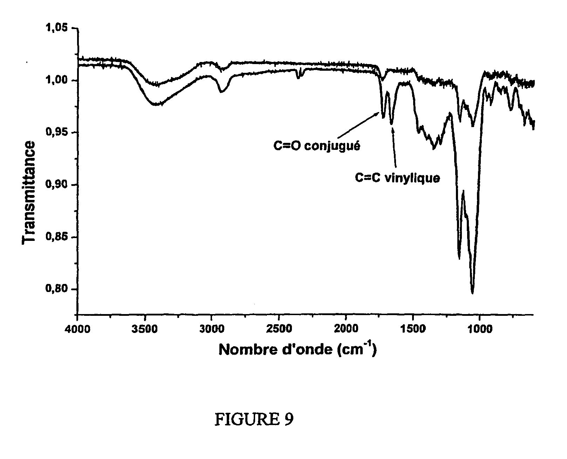

On obtient, après rinçage de la lame à l'acétone et à l'eau selon le même protocole que celui décrit ci-dessus à l'exemple 1, un film de 200 nm d'épaisseur, dont les caractéristiques, vérifiées par spectrophotométrie IR correspondent à celles du poly(dextrane-GMA) (figure 9 sur laquelle la courbe basse représente le spectre IR de la lame avant rinçage et la courbe haute représente le spectre IR après rinçage).

Il est important de noter que la teneur en eau de la solution de synthèse était de l'ordre de 5000 ppm.

## Revendications

1. Procédé de fixation de macro-objets sur une surface conductrice ou semi-conductrice de l'électricité par électro-greffage, **caractérisé par le fait qu'**il consiste :
a) à préparer une solution électrolytique comprenant, sous forme dissoute, particulaire ou émulsionnée, au moins un macro-objet constitué d'une partie macro-structurale fonctionnalisée par au moins un groupement électro-actif et apte à provoquer l'électro-greffage dudit macro-objet sur ladite surface, ladite solution électrolytique présentant une teneur en protons supérieure ou égale à 50 ppm ; puis
b) à électrolyser ladite solution dans une cellule d'électrolyse en utilisant la surface conductrice ou semi-conductrice à recouvrir comme électrode de travail et au moins une contre électrode, pour conduire, par électro-réduction ou électro-oxydation de ladite solution, à un revêtement greffé dudit macro-objet ou de ses produits de condensation sur ladite surface.

2. Procédé selon la revendication 1, **caractérisé par le fait que** la teneur en protons varie entre 50 et 100.000 ppm.

3. Procédé selon la revendication 1 ou 2, **caractérisé par le fait que** les protons de la solution électrolytique sont apportés par les solvants constituant ladite solution et/ou par les macro-objets mis en oeuvre au cours du procédé d'électro-greffage et présents au sein de la solution électrolytique.

4. Procédé selon l'une quelconque des revendications précédentes, **caractérisé par le fait que** les groupements électro-actifs sont choisis parmi :
- les groupements électrophiles susceptibles de subir une addition nucléophile de la part d'un site de croissance nucléophile d'un polymère électro-initié,
- les groupements nucléophiles susceptibles d'effectuer une addition nucléophile sur un site de croissance électrophile d'un polymère électro-initié.

5. Procédé selon la revendication 4, **caractérisé par le fait que** les groupements électrophiles sont choisis parmi les groupements vinyliques activés par des groupements électro-attracteurs ou par des groupements cycliques clivables par attaque nucléophile ou électrophile.

6. Procédé selon la revendication 4, **caractérisé par le fait que** les groupements nucléophiles sont choisis parmi les groupements vinyliques activés par des groupements électro-donneurs ou par des groupements cycliques clivables par attaque nucléophile ou électrophile.

7. Procédé selon l'une quelconque des revendications précédentes, **caractérisé par le fait que** les macro-objets sont choisis parmi les composés de formules suivantes :
A-P
A-P-B
P(A)ₙ
[M(A)]n
A-[M(B)]ₙ
A-[M(B)]ₙ-C
A-P-[M(B)]ₙ
A-P-[M(B)]ₙ-C
dans lesquelles :
- P est une macro-structure choisie parmi :
■ les oligomères et les polymères organiques ou inorganiques,
■ les polymères obtenus par polycondensation d'un ou de plusieurs réactifs,
■ les polysiloxanes, les poly-ortho-esters, les polyphosphates, le parylène et les polymères à base parylène substitué,
■ les polymères conducteurs,
■ les oligopeptides et les protéines,
■ les molécules d'acide nucléique,
■ les polysaccharides,
■ les porphyrines substituées ou non,
■ les phtalocyanines substituées ou non,
■ les polymères formés à partir de monomères substitués ou de macromolécules substituées de la liste ci-dessus,
■ les pré-polymères, macromères ou téléchéliques basés sur les monomères et/ou macromolécules de la liste ci-dessus,
■ les co-polymères et/ou mélanges pouvant être formés à partir de ces polymères, de leurs monomères constitutifs ou des macromolécules ci-dessus, substitués ou non ;
■ les macro-édifices non polymériques et non strictement macromoléculaires,
■ les agrégats minéraux,
■ les vésicules lipidiques et
■ les cellules vivantes,
■ les objets comportant au moins une surface apte à être fonctionnalisée par au moins un groupement électro-actif ;
- n est un nombre entier supérieur ou égal à 1 ;
- M est une unité monomère constitutive des structures de type P définies ci-dessus lorsque celles-ci sont un polymère ;
- A, B et C, identiques ou différents, sont choisis parmi les groupements fonctionnels électrophiles susceptibles de participer à ou de bloquer la croissance d'une polymérisation anionique et les groupements fonctionnels nucléophiles susceptibles de participer à ou de bloquer la croissance d'une polymérisation cationique, A, B et C étant liés par des liaisons covalente, ionique, dative ou par liaison hydrogène avec la partie macro-structurale P ou la partie monomérique M.

8. Procédé selon la revendication 7, **caractérisé par le fait que** les polymères définis pour P sont choisis parmi les polymères vinyliques, réticulés ou non, et les polymères de l'isoprène, de l'éthylène, du propylène, de l'oxyde d'éthylène et des molécules à cycle clivable par attaque nucléophile ou électrophile.

9. Procédé selon la revendication 7, **caractérisé par le fait que** les polymères obtenus par polycondensation d'un ou de plusieurs réactifs sont choisis parmi les polymères et co-polymères de l'acide lactique ou de ses oligomères, des lactones, de l'acide glycolique, de l'éthylène glycol, les polyamides, les polyuréthanes, les poly-ortho-esters et les polyaspartates.

10. Procédé selon la revendication 7, **caractérisé par le fait que** les polymères conducteurs sont choisis parmi les polymères à base d'aniline, de thiophène ou d'éthylènedioxythiophène, de pyrrole, de leurs analogues et de leurs dérivés substitués.

11. Procédé selon la revendication 7, **caractérisé par le fait que** les protéines sont choisies parmi les antigènes, les enzymes, les facteurs de croissance, les anti-corps et les collagènes.

12. Procédé selon la revendication 7, **caractérisé par le fait que** les polysaccharides sont choisis parmi la cellulose et les celluloses substituées, les chitosanes et chitosanes substitués ou fonctionnalisés, les dextranes et dextranes substitués ou fonctionnalisés, les amyloses, les pectines, l'amidon et l'héparine.

13. Procédé selon l'une quelconque des revendications 7 à 12, **caractérisé par le fait que** les objets ayant au moins une surface apte à être fonctionnalisée par au moins un groupement électro-actif sont choisis parmi les objets non liquides et non gazeux ayant au moins une surface conductrice, semi-conductrice ou isolante de l'électricité choisie parmi les surfaces métalliques, organiques minérales telles que le bois, le verre, le plastique, les fibres végétales, les matières kératiniques, les gels organiques ou minéraux, et leurs composites ou leurs mélanges.

14. Procédé selon l'une quelconque des revendications 7 à 13, **caractérisé par le fait que** les groupements fonctionnels A, B et C sont choisis parmi les acides et bases de Lewis portant - respectivement - une lacune ou un doublet électronique ; les groupements fonctionnels organiques polymérisables par voie anionique et les groupements fonctionnels organiques polymérisables par voie cationique.

15. Surface conductrice ou semi-conductrice de l'électricité obtenue en mettant en oeuvre le procédé tel que défini à l'une quelconque des revendications 1 à 14 et dont au moins une face est recouverte par un revêtement greffé d'un macro-objet tel que défini dans ces mêmes revendications.

16. Surface selon la revendication 15, **caractérisée par le fait que** le revêtement présente une épaisseur comprise entre 1 nm et 10 µm.

17. Surface selon la revendication 15 ou 16, **caractérisée par le fait que** le revêtement se présente sous la forme d'un film polymère, d'un film organique d'une macromolécule biologique, d'un tapis de billes ou de nanotubes ou d'un tapis cellulaire vivant.

18. Utilisation du procédé de fixation de macro-objets par électro-greffage tel que défini à l'une quelconque des revendications 1 à 14, pour l'électro-collage de macro-objets sur une surface conductrice ou semi-conductrice de l'électricité.

## Claims

1. Process for fixing macro-objects to an electricity conducting or semi-conducting surface by electro-grafting, **characterised in that** it comprises:
a) preparing an electrolytic solution comprising, in dissolved, particulate or emulsified form, at least one macro-object consisting of a macro-structural part functionalised by at least one electroactive group and adapted to trigger the electro-grafting of said macro-object to said surface, said electrolytic solution having a proton content greater than or equal to 50 ppm; then
b) electrolysing said solution in an electrolysis cell using the conductive or semi-conductive surface which is to be covered as the working electrode and at least one counter-electrode, in order to lead, by electro-reduction or electro-oxidation of said solution, to a grafted covering of said macro-object or of its condensation products to said surface.

2. Process according to claim 1, **characterised in that** the proton content varies between 50 and 100,000 ppm.

3. Process according to claim 1 or 2, **characterised in that** the protons of the electrolytic solution are supplied by the solvents that make up said solution and/or by the macro-objects used in the course of the electro-grafting process and which are present in the electrolytic solution.

4. Process according to any one of the preceding claims, **characterised in that** the electroactive groups are selected from among:
- the electrophilic groups capable of undergoing nucleophilic addition from a nucleophilic growth site of an electro-initiated polymer,
- the nucleophilic groups capable of carrying out nucleophilic addition at an electrophilic growth site of an electro-initiated polymer.

5. Process according to claim 4, **characterised in that** the electrophilic groups are selected from among the vinyl groups activated by electron-attracting groups or by cyclic groups which can be cleaved by nucleophilic or electrophilic attack.

6. Process according to claim 4, **characterised in that** the nucleophilic groups are selected from among the vinyl groups activated by electron donor groups or by cyclic groups which can be cleaved by nucleophilic or electrophilic attack.

7. Process according to any one of the preceding claims, **characterised in that** the macro-objects are selected from among the compounds of the following formulae:
A-P
A-P-B
P(A)n
[M(A)]n
A-[M(B)]ₙ
A-[M(B)]ₙ-C
A-P-[M(B)]ₙ
A-P-[M(B)]ₙ-C
wherein:
- P is a macro-structure selected from among:
■ oligomers and organic or inorganic polymers,
■ polymers obtained by polycondensation of one or more reagents,
■ polysiloxanes, poly-ortho-esters, polyphosphates, parylene and polymers with a substituted parylene base,
■ conductive polymers,
■ oligopeptides and proteins,
■ nucleic acid molecules,
■ polysaccharides,
■ substituted or unsubstituted porphyrins,
■ substituted or unsubstituted phthalocyanines,
■ polymers formed from substituted monomers or substituted macromolecules from the list above,
■ prepolymers, macromers or telechelics based on the monomers and/or macromolecules from the list above,
■ copolymers and/or mixtures which may be formed from these polymers, from their constituent monomers or from the macromolecules listed above, either substituted or unsubstituted;
■ non-polymeric and not strictly macromolecular macro-structures,
■ mineral aggregates,
■ lipid vesicles and
■ living cells,
■ objects having at least one surface capable of being functionalised by at least one electroactive group;
- n is an integer greater or equal to 1;
- M is a monomer unit that makes up the structures of type P defined above when these structures are a polymer;
- A, B and C, which may be identical or different, are selected from among the electrophilic functional groups capable of participating in or blocking the growth of an anionic polymerisation and the nucleophilic functional groups capable of participating in or blocking the growth of a cationic polymerisation, A, B and C being linked by covalent, ionic or dative bonds or by hydrogen bonding to the macro-structural part P or the monomeric part M.

8. Process according to claim 7, **characterised in that** the polymers defined for P are selected from among cross-linked or uncross-linked vinyl polymers and polymers of isoprene, ethylene, propylene, ethylene oxide and molecules having a ring that can be cleaved by nucleophilic or electrophilic attack.

9. Process according to claim 7, **characterised in that** the polymers obtained by polycondensation of one or more reagents are selected from among the polymers and copolymers of lactic acid or its oligomers, lactones, glycolic acid, ethylene glycol, polyamides, polyurethanes, poly-ortho-esters and polyaspartates.

10. Process according to claim 7, **characterised in that** the conductive polymers are selected from among the polymers based on aniline, thiophene or ethylene dioxythiophene, pyrrole, their analogues and the substituted derivatives thereof.

11. Process according to claim 7, **characterised in that** the proteins are selected from among antigens, enzymes, growth factors, antibodies and collagens.

12. Process according to claim 7, **characterised in that** the polysaccharides are selected from among cellulose and the substituted celluloses, chitosans and substituted or functionalised chitosans, dextranes and substituted or functionalised dextranes, amyloses, pectins, starch and heparin.

13. Process according to any one of claims 7 to 12, **characterised in that** the objects having at least one surface adapted to be functionalised by at least one electroactive group are selected from among non-liquid and non-gaseous objects having at least one electricity conducting, semi-conducting or insulating surface selected from among metallic surfaces, organic mineral surfaces such as wood, glass, plastics, vegetable fibres, keratin materials, organic or mineral gels and composites or mixtures thereof.

14. Process according to any one of claims 7 to 13, **characterised in that** the functional groups A, B and C are selected from among Lewis acids and bases carrying, respectively, a gap or an electron doublet; anionically polymerisable organic functional groups and cationically polymerisable organic functional groups.

15. Electricity conducting or semi-conducting surface obtained by carrying out the process as defined in any one of claims 1 to 14, at least one side of which is covered with a grafted coating of a macro-object as defined in these same claims.

16. Surface according to claim 15, **characterised in that** the coating has a thickness of between 1 nm and 10 µm.

17. Surface according to claim 15 or 16, **characterised in that** the coating takes the form of a polymer film, an organic film of a biological macromolecule, a carpet of beads or nanotubes or a carpet of living cells.

18. Use of the process for fixing macro-objects by electro-grafting as defined in any one of claims 1 to 14, for the electro-adhesion of macro-objects to an electricity conducting or semi-conducting surface.

## Patentansprüche

1. Verfahren zum Fixieren von Makroobjekten auf einer elektrisch leitenden oder halbleitenden Oberfläche mittels Elektropfropfung, **gekennzeichnet durch**:
a) Herstellen einer Elektrolytlösung, die wenigstens ein gelöstes, emulgiertes oder aus Teilchen bestehendes Makroobjekt aufweist, das teilweise aus einer Makrostruktur besteht, die **durch** wenigstens eine elektroaktive Gruppe zum Bewirken einer Elektropfropfung des besagten Makroobjektes auf der besagten Oberfläche funktionalisiert ist, wobei die besagte Elektrolytlösung eine Protonengehalt von über oder gleich 50 ppm aufweist, und anschließendes
b) Durchführen einer Elektrolyse mit der besagten Lösung in einer Elektrolysezelle unter Verwendung der zu bedeckenden leitenden oder halbleitenden Oberfläche als Arbeitselektrode und wenigstens einer Gegenelektrode zum Erhalt einer **durch** Elektroreduktion oder Elektrooxydation der besagten Lösung aufgepfropften Beschichtung des besagten Makroobjektes oder seiner Kondensationsprodukte auf der besagten Oberfläche.

2. Verfahren nach Anspruch 1, **dadurch gekennzeichnet, dass** der Protonengehalt zwischen 50 und 100.000 ppm variiert.

3. Verfahren nach einem der Ansprüche 1 oder 2, **dadurch gekennzeichnet**e ist, dass die Protonen der Elektrolytlösung durch die Lösungsmittel der Lösung und/oder den Makroobjekten bereitgestellt werden, die bei dem Elektropfropfungsverfahren eingesetzt werden und in der Elektrolytlösung vorhanden sind.

4. Verfahren nach einem der vorhergehenden Ansprüche, **dadurch gekennzeichnet, dass** die elektroaktiven Gruppen ausgewählt sind unter:
- elektrophilen Gruppen, die geeignet sind, eine nukleophile Additionsreaktion seitens einer nukleophilen Wachstumsstelle eines elektro-iniziierten Polymers zu erfahren,
- nukleophilen Gruppen, die geeignet sind, eine nukleophile Additionsreaktion an einer elektrophilen Wachstumsstelle eines elektro-iniziierten Polymers einzugehen.

5. Verfahren nach Anspruch 4, **dadurch gekennzeichnet, dass** die elektrophilen Gruppen unter Vinylgruppen ausgewählt sind, die durch Elektronenakzeptoren oder durch zyklische Gruppen aktiviert sind, die mittels eines nukleophilen oder elektrophilen Angriffs spaltbar sind.

6. Verfahren nach Anspruch 4, **dadurch gekennzeichnet, dass** die nukleophilen Gruppen unter Vinylgruppen ausgewählt sind, die durch Elekronendonatoren oder durch zyklische Gruppen aktiviert sind, die mittels eines nukleophilen oder elektrophilen Angriffs spaltbar sind.

7. Verfahren nach einem der vorhergehenden Ansprüche, **dadurch gekennzeichnet, dass** die Makroobjekte unter Verbindungen gemäß folgender Formel ausgewählt sind:
A-P,
A-P-B,
P(A)ₙ,
[M(A)]ₙ,
A-[M(B)]ₙ,
A-[M(B)]ₙ-C,
A-P-[M(B)]ₙ,
A-P-[M(B)]ₙ-C,
wobei
- P eine Makrostruktur ist, die ausgewählt ist unter:
• Oligomeren und organischen oder anorganischen Polymeren,
• Polymeren, die durch Polykondensation eines oder mehrerer Reagenzien erhältlich sind,
• Polysiloxanen, Poly-ortho-estern, Polyphosphaten, Parylenen und Polymeren auf der Basis von substituierten Parylenen,
• leitenden Polymeren,
• Oligopeptiden und Proteinen,
• Molekülen aus Nukleinsäuren,
• Polysacchariden,
• substituierten oder unsubstituierten Porphyrinen,
• substituierten oder unsubstituierten Phthalocyaninen,
• Polymeren auf der Basis substituierter Monomere oder substituierter Makromoleküle der oben aufgeführten Liste,
• Prepolymeren, Makromeren oder Telechelen, die auf Monomeren und/oder Makromolekülen der oben aufgeführten Liste basieren,
• Copolymeren und/oder Mischungen, die ausgehend von diesen Polymeren, von deren konstitutiven Monomeren oder deren oben aufgeführten substituierten oder unsubstituierten Makromolekülen gebildet werden können,
• nicht polymerisierten und nicht streng makromolekularen Makrostrukturen,
• anorganischen Aggregaten,
• lipidischen Vesikeln und
• lebenden Zellen,
• Objekten mit wenigstens einer Oberfläche, die durch wenigstens eine elektroaktive Gruppe funktionalisierbar sind,
- n ein ganze Zahl größer oder gleich 1 ist,
- M ein Monomer ist, der die oben definierten Strukturen des Typs P bildet, insoweit diese ein Polymer darstellen,
- A, B und C, gleich oder verschieden sind und unter elektrophilen funktionellen Gruppen, die dazu geeignet sind, an dem Wachstum einer anionischen Polymerisation teilzunehmen oder das Wachstum zu hemmen, und nukleophilen funktionellen Gruppen ausgewählt sind, die dazu geeignet sind, an dem Wachstum einer kationischen Polymerisation teilzunehmen oder das Wachstum zu hemmen, wobei A, B und C durch kovalente, ionische, komplexe oder ionische Bindungen mit dem makrostrukturellen Teil von P oder einem Teil des Monomers M verbunden sind.

8. Verfahren nach Anspruch 7, **dadurch gekennzeichnet, dass** die für P definierten Polymere unter vernetzten oder nicht vernetzen vinylischen Polymeren und Polymeren von Isopren, Ethylen, Propylen, Oxiden des Ethylens und zyklischen Molekülen ausgewählten sind, die mittels eines nukleophilen oder elektrophilen Angriffs spaltbar sind.

9. Verfahren nach Anspruch 7, **dadurch gekennzeichnet, dass** die durch Polykondensation eines oder mehrerer Reagenzien erhaltenen Polymere unter Polymeren und Copolymeren der Milchsäure, der Lactone, Glykolsäure, Ethylenglykol, Polyamid, den Polyurethan, Poly-ortho-ester und Polyaspartat oder deren Oligomeren ausgewählt sind.

10. Verfahren nach Anspruch 7, **dadurch gekennzeichnet, dass** die leitenden Polymere unter den Polymeren auf der Basis von Anilin, Thiophen oder Ethylendioxythiophen, Pyrrol, deren Analoga oder deren substituierten Derivaten ausgewählt sind.

11. Verfahren nach Anspruch 7, **dadurch gekennzeichnet, dass** die Proteine unter Antigenen, Enzymen, Wachstumsfaktoren, Antikörpern und Kollagenen ausgewählt sind.

12. Verfahren nach Anspruch 7, **dadurch gekennzeichnet, dass** die Polysaccharide unter Cellulose, substituierter Cellulose, Chitosanen, substituierten oder funktionalisierten Chitosanen Dextranen, substituierten oder funktionalisierten Dextranen, Amylosen, Pektinen, Amidonen und Heparinen ausgewählt sind.

13. Verfahren nach einem der Ansprüche 7 bis 12, **dadurch gekennzeichnet, dass** die Objekte mit wenigstens einer Oberfläche, die zum Funktionalisieren mittels wenigstens einer elektroaktiven Gruppe geeignet ist, unter nicht flüssigen und nicht gasförmigen Objekten mit wenigstens einer elektrisch leitenden, halbleitenden oder isolierenden Oberfläche, die metallisch, organisch oder anorganisch ist, ausgewählt sind, wie beispielsweise Holz, Glas, Plastik, pflanzlichen Fasern, auf Kreatin basierenden Materialien, organischen oder anorganischen Gelen und deren Zusammensetzungen oder deren Mischungen.

14. Verfahren nach einem der Ansprüche 7 bis 13, **dadurch gekennzeichnet, dass** die funktionellen Gruppen A, B und C unter Lewis-Säuren und Lewis-Basen, die eine Elektronenlücke beziehungsweise ein Elektronenpaar aufweisen, funktionellen organischen Gruppen, die auf anionischem Wege polymerisierbar sind, und funktionellen organischen Gruppen ausgewählt sind, die auf kationischem Wege polymerisierbar sind.

15. Elektrisch leitende oder halbleitende Oberfläche, die durch ein Verfahren gemäß einem der Ansprüche 1 bis 14 herstellbar ist und wenigstens eine Oberfläche aufweist, die mit einer aufgepfropften Besichtung eines Makroobjektes beschichtet ist, das durch die gleichen Ansprüche definiert ist.

16. Oberfläche nach Anspruch 15, **dadurch gekennzeichnet, dass** die Beschichtung eine Dicke zwischen einem Nanometer und zehn Mikrometern aufweist.

17. Oberfläche nach einem der Ansprüche 15 oder 16, **dadurch gekennzeichnet, dass** die Beschichtung ein Polymerfilm, ein organischer Film, eine Schicht aus einem biologischen Makromolekül, eine Schicht aus Kügelchen oder Nanoröhrchen oder eine Schicht aus lebenden Zellen ist.

18. Verwendung eines Verfahrens zum Fixieren eines Makroobjektes mittels Elektropfropfung gemäß einem der Ansprüche 1 bis 14 zum Anbringen des Makroobjektes auf elektrischem Wege auf einer elektrisch leitenden oder halbleitenden Oberfläche.
